# EUROPEAN PATENT APPLICATION

(11) **EP 1 178 297 A1**
(43) Date of publication of application: **06.02.2002**
(21) Application number: 00830562.5
(22) Date of filing: 04.08.2000
(51) Int. Cl.: G01M 3/22

(54) **A method for the continous detection of micro-leaks in packages of products in modified atmosphere and a device for said detection**

(71) Applicant: Prisma S.r.l., Frazione Salsominore, 43039 Salsomaggiore Terme(Parma) (IT)
(72) Inventor: Brunetti, Alberto, 43039 Salsomaggiore Terme (Parma) (IT); Bandini, Maurizio, 43100 Parma (IT)
(74) Representative: Gotra, Stefano

(57) **Abstract**

The invention relates to the field of systems for checking lacerations or micro-lacerations in cases of packages of products in modified or controlled atmosphere.

More specifically, the invention relates to a method that provides for inserting into the product package, in addition to the usual inert gases such as nitrogen and carbon dioxide, also another gas with low molecular weight, such as helium. The product packaged with the insertion of helium is placed in a vacuum so that small lacerations or undesired micro-porosities cause the escape of the inert gases and in particular of helium which, given its molecular structure, presents a high degree of fugacity. The escape is detected by appropriate sensors comprised in the device. The device comprises a bell which encompasses a conveyor belt whereon the product arrives, in the bell is inserted a conduit which is connected to the sensors.

## Description

The present invention relates to a method for the continuous detection of micro-leaks in packages of products in modified atmosphere and to a device for effecting said detection. A method for preserving food and other products, such as cosmetics, pigments or chemicals and human blood plasma has been known for several years; said method provides for wrapping or inserting the products in a film and/or containers made of plastic material from which ambient air is extracted and into which a control fluid constituted by a mixture of inert gases is inserted. This type of preserving method is known in the art as preservation in modified or controlled atmosphere.

The gas mixture is generally formed by two or more gases; those most frequently used are nitrogen and carbon dioxide in a pre-packaged proportion which, in general, is two thirds nitrogen and one third carbon dioxide.

The insertion of the control gas mixture allows to extend the shelf life (expiration date) of the product from a few days to a few weeks.

It is extremely important to verify that the package is perfectly sealed and has no lacerations or micro-lacerations or high porosity of the plastic film, since such defects of the package would lead to several drawbacks, such as:
- economic loss due to the leakage of the control fluids constituted by technical gases having a certain cost;
- commercial lost, for the product needs to be sold off rapidly, since with the loss of the control fluids its commercial shelf life is considerably reduced;
- real danger for the consumer's health since the food product, through the holes, can be attacked by bacteria or viruses or in any case it can oxidise and hence be unacceptable.

Currently, the integrity of the packages is verified through sampling checks, withdrawing from the packaging line a certain number of packages which are taken to a laboratory where they are analysed one at a time under a chamber in which a vacuum is created.

Hence, it is possible to obtain a non-continuous detection, which is certainly not applicable for the entire set of products and provides only statistical, not absolute, guarantees.

The aim of the present invention is to eliminate the aforesaid drawbacks by making available a method and a device that allow continuously to analyse the entire production run and hence to certify a guarantee of integrity for whole lots or for the entire daily or monthly production run. A further aim is automatically to reject packages presenting lacerations or excessively high porosity, which would allow even a slow escape of the control gas.

Said aims are fully achieved by the method for the continuous detection of micro-leaks in packages of products in modified atmosphere of the present invention, which is characterised by the content of the claims set out below and in particular in that the method provides for inserting into the package, in addition to the usual control gases, also another gas with low molecular weight such as helium in a percentage that may vary for instance from 5 to 7%. The device is characterised instead in that it comprises one or more bells, each of which is able to house packages of product to be checked, said bell is connected to an aspiration system in order to create a predetermined state of vacuum in the bell itself into which is inserted a tubular probe connected to an analyser able to effect a comparison of the concentration of an element in the gaseous state at very low molecular weight present in the bell relative to the atmospheric environment or to a sample environment.

This and other features shall become more readily apparent from the following description of a preferred embodiment illustrated purely by way of non limiting example in the accompanying tables of drawings, in which:
- Figure 1 shows a front schematic view of the device for detecting leaks in the package;
- Figure 2 shows the device in a plan view;
- Figure 3 shows a front schematic view of a detail of Figure 1 in another operative position;
- Figure 4 shows an elevation of a detail of the device and more specifically a bell in which a vacuum is created;
- Figure 5 shows a detail according to Section IV-IV of Figure 4;
- Figure 6 shows a block diagram of the phases of the method.

With reference to Figure 6, the reference number 1 indicates the phase whereby a gas with low molecular gas, such as helium, is inserted into the control gas mixture in a proportion of 5-7%.

The percentage of helium thus inserted shall in any case be such as not to influence the organoleptic stability of the packaged product.

The product packaged according to known techniques with known plastic materials is transferred into a bell in which a vacuum is created (phase indicated as 2).

The degree of vacuum depends mainly on three factors:
- type of plastic film employed for the package;
- minimum size of hole or opening or porosity to be identified;
- type of packaged product, also in view of its shape.

The vacuum created has the effect of accentuating any defect in the package, favouring the escape of the control gases and even more rapidly the escape of helium, given its high fugacity due to its molecular weight, considerably lower than the molecular weight of the other components of the control mixture.

The subsequent phase 3 is that of detecting, with an appropriate detector, the presence of helium inside the bell in which the product package is enclosed when it is to be analysed.

The detection phase takes place by means of aspiration towards the detector, which shall make a comparison with the quantity of helium normally present in the atmospheric environment.

If the detector indicates the presence of helium, then a quantity of helium exceeding the atmospheric quantity in the bell has been present, and hence the control fluid has leaked outside the package which is not intact or which presents a degree of porosity that is not allowed for the integrity of the product for a required period.

If the detector indicates the presence of helium, then the subsequent phase 4 shall take place, whereby the defective package is rejected.

The reference number 5 indicates a so-called purging phase whereby the helium present after a detection procedure is aspirated and expelled into an external environment relative to the space where the device is installed. The detector is thus brought back into a condition in which it cannot be influenced by the previous detection procedure, to start another detection cycle.

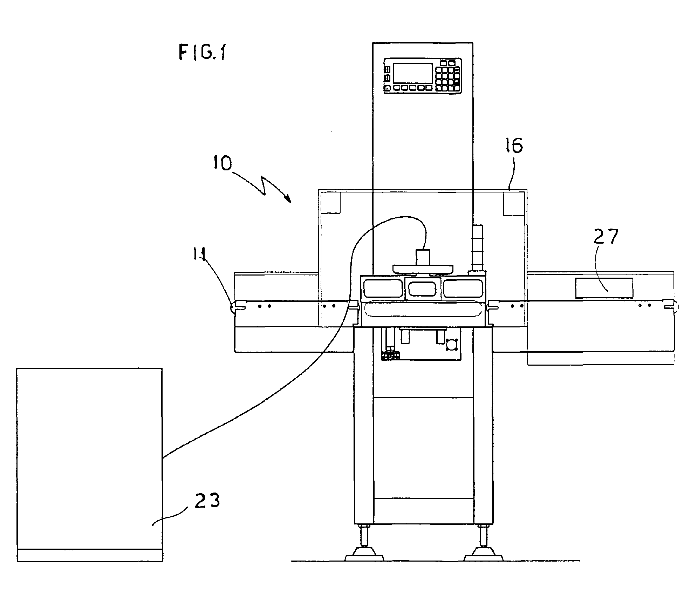

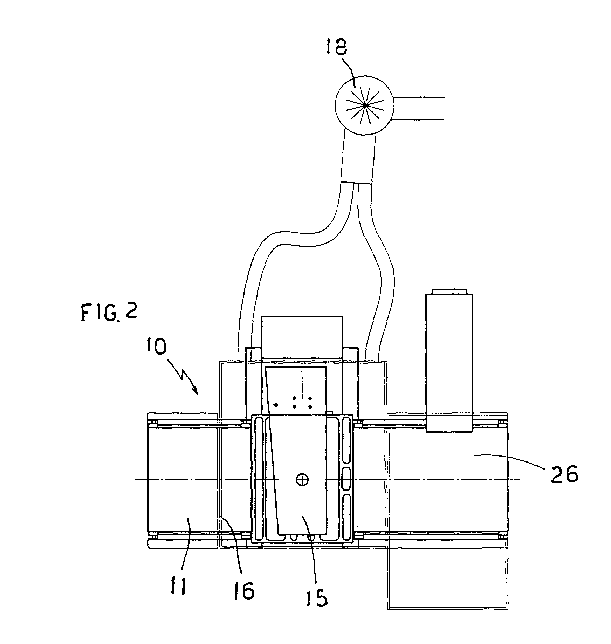

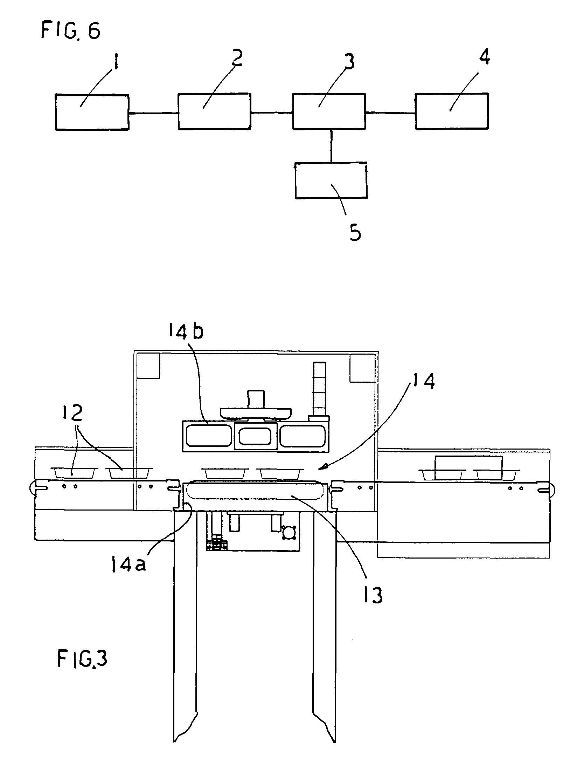

With reference to Figures 1, 2 and 3, the device globally indicated as 10 comprises a belt 11 for feeding the packages 12 to be analysed from the point of view of their physical integrity.

The feeding belt 11 carries the packages on a conveyor belt 13 inserted in a bell 14.

More specifically, the bell 14 is formed by a lower fixed part 14a into which the conveyor 13 is inserted almost completely and an upper movable part 14b supported by a beam 15 actuated through known pneumatic and/or electric means.

The reference number 16 indicates a tunnel that is over-pressurised relative to the environment in which the device is located; the function of the tunnel is to create a barrier and hence to isolate the package to be tested from the external environment.

To over-pressurise the tunnel 16, the latter is connected to a fan 18 which aspirates air in an area that is not polluted by possible helium leaks.

A second function of the over-pressurised tunnel is to create the appropriate fluid dynamic conditions for the purging air.

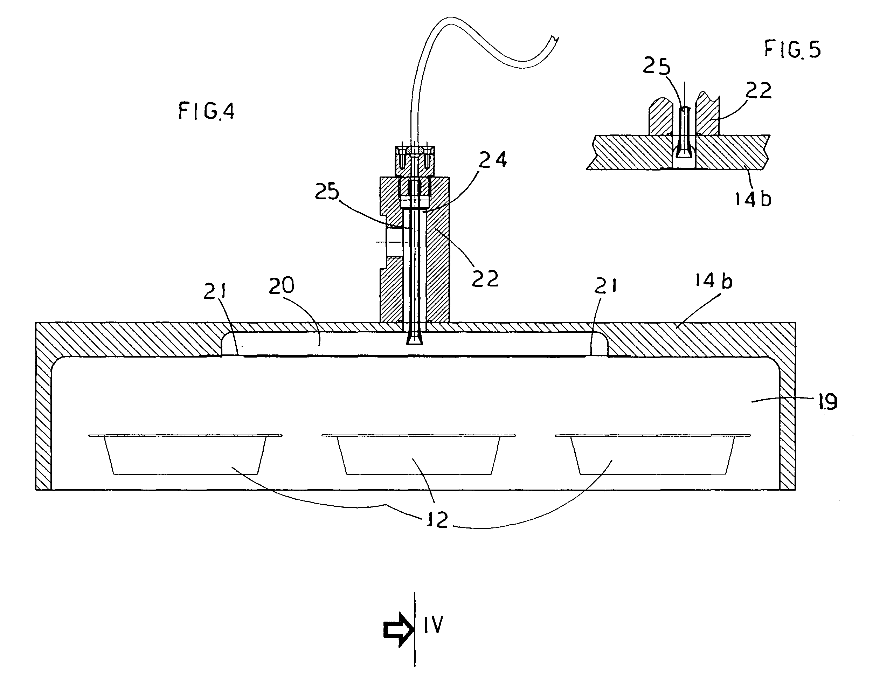

As better illustrated in Figures 4 and 5 according to a preferred embodiment the bell 14b comprises a chamber 19, in which the packages 12 are housed, and a conduit 20 connected by means of holes 21 to the aforesaid chamber.

The number and the geometry of the passage holes 21 depend on the type of package, on the number of packages placed under the bell and on the product contained in the packages.

The conduit 20 is connected by means of a tubular element 22 to an aspiration system 23 to create a determined degree of vacuum in the bell itself.

In the chamber 24 of the tubular element 22 is housed a tubular probe 25 which is connected to a known analyser, able to effect a comparison of the concentration of helium present in the conduit 20 with the concentration of helium present in the atmospheric environment.

The analyser not shown herein can be located in the aspiration structure 23.

The method and the device described above are advantageously applied to the checking of leaks or micro-leaks in packages of food products, but it is evident that method and device may be applied to the checking of any other product packaged in modified or controlled atmosphere.

The tubular probe shall have such a geometry as to allow to obtain a vacuum in the shortest possible time.

The tubular probe shall have such a shape as to aspirate the sample of controlled atmosphere which may have escaped from the package and to allow the detector to effect a comparison of said sample in the shortest possible time.

The reference number 26 indicates an off-loading belt whereon can interfere a mechanical ejector 27 which can interfere on the detected defective product.

The device as described above presents the great advantage of being able to manage statistical data measured on 100% of the packages produced.

The purging of the upper and lower bell occurs through the injection of ambient air from below and from the tunnel.

The feeding conveyor 11 has the function of synchronising the production line upstream with the conveyor belt 13 inserted in the bell 14.

The description always refers to the introduction of helium into the control fluid, but it is possible to use another gas having a molecular weight that is very low, or in any case sharply lower than the molecular weight of the other gases forming the control fluid so as to be highly fugacious relative thereto.

Numerous modifications and variations may be provided; for instance, the bell may have its upper part fixed and its lower part movable, or the fixed lower bell may be absent and in this case the seal shall be achieved by the upper bell which shall adhere to a single conveyor belt for the packages.

A further variation could provide for multiple bells positioned in series along a conveyor, each bell shall be provided with a probe and with its own detector, or the bells may be positioned in a circle overlying a rotating carrousel on whose periphery the packages of product to be checked are fed.

Obviously, all envisioned technical solutions and others not shown herein fall within the scope of protection of the claims set out below.

## Claims

1. A method for the continuous detection of micro-leaks in packages of products in modified or controlled atmosphere, **characterised in that** it comprises the following phases:
- inserting into the package of the product, in addition to the usual gases forming the control fluid, an element in the gaseous state with very low molecular weight such as helium or in any case with molecular weight sharply lower than the molecular weight of the other gases that form the control fluid;
- positioning the package in an environment under vacuum, able to accentuate and highlight lacerations or micro-lacerations which allow the control fluid to leak out of the package;
- detecting the presence of the element at very low molecular weight by comparison with the percentage of the same element present in the atmospheric environment or in a sample environment.

2. A method as claimed in claim 1, **characterised in that** the element in the gaseous state inserted into the package together with the other gases that form the control fluid is helium.

3. A method as claimed in claims 1 and 2, **characterised in that** the helium is inserted in a percentage of 5-7% relative to the other gases that form the control fluid.

4. A device for the continuous detection of micro-leaks in packages of products in modified or controlled atmosphere, **characterised in that** it comprises one or more bells (14) each of which is able to house packages of product to be checked, each of said bells being connected to an aspiration system (23) to create a pre-determined degree of vacuum in each bell into which is also inserted a tubular probe (25) connected to an analyser able to effect a comparison of the concentration of an element in the gaseous state with very low molecular weight, such as helium, present in the bell itself relative to the atmospheric environment or to a sample environment.

5. A device as claimed in claim 1, **characterised in that** the bell (14) is formed by a fixed lower bell (14a) into which is inserted a conveyor belt (13) on which the packages to be checked arrive, and a movable upper bell (14b) which encompasses the packages of product to be checked.

6. A device as claimed in claim 4, **characterised in that** it comprises a tunnel (16) that is over-pressurised relative to the environment where the device is located and which totally encompasses the bell (14).

7. A device as claimed in claims 4 and 5, **characterised in that** the movable upper bell (14b) comprises a chamber (19) able to house the packages of products to be checked and a conduit (20) connected by means of holes (21) to the aforesaid camera (19), the conduit (20) being connected both with the tubular probe (25) and with the aspiration system (23).
